Europäisches Patentamt

European Patent Office

Office européen des brevets

(19)

(11) Veröffentlichungsnummer : **0 043 018**
**B1**

# (12) EUROPÄISCHE PATENTSCHRIFT

(45) Veröffentlichungstag der Patentschrift :
**18.01.84**

(51) Int. Cl.³ : **A 23 J   7/02, C 07 F   9/10**

(21) Anmeldenummer : **81104557.4**

(22) Anmeldetag : **12.06.81**

(54) **Verfahren zur Gewinnung von ölfreiem Phosphatidylcholin.**

(30) Priorität : **25.06.80 DE 3023814**

(43) Veröffentlichungstag der Anmeldung :
**06.01.82 Patentblatt 82/01**

(45) Bekanntmachung des Hinweises auf die Patenterteilung : **18.01.84 Patentblatt 84/03**

(84) Benannte Vertragsstaaten :
**AT BE CH DE FR GB IT LI LU NL SE**

(56) Entgegenhaltungen :
**DE-A- 1 492 952**
**FR-A- 2 388 823**
**LU-A-   28 584**
**Die Akte enthält technische Angaben, die nach dem**
**Eingang der Anmeldung eingereicht wurden und die**
**nicht in dieser Patentschrift enthalten sind.**

(73) Patentinhaber : **A. Nattermann & Cie. GmbH**
**Nattermannallee 1**
**D-5000 Köln 30 (DE)**

(72) Erfinder : **Günther, Bernd-Rainer, Dr.**
**Eulenweg 12**
**D-5600 Wuppertal 1 (DE)**

(74) Vertreter : **Wuesthoff, Franz, Dr.-Ing. et al**
**Patentanwälte Wuesthoff -v. Pech-**
**mann-Behrens-Goetz Schweigerstrasse 2**
**D-8000 München 90 (DE)**

EP 0 043 018 B1

# 0 043 018

## Verfahren zur Gewinnung von ölfreiem Phosphatidylcholin

Pflanzliche Rohphosphatide, z. B. aus Soja, Erdnuß, Sonnenblumen oder Raps, sind Gemische aus Ca. 30-40 % Neutralöl und freien Fettsäuren, 5-10 % Mono-, Di- oder Polysacchariden, 50-60 % Phosphatiden, 1-2 % Sterinen, Wachsen, Aminosäuren und Peptiden. Der Phosphatidanteil besteht in der Regel aus einer Mischung von Phosphatidylcholinen, phosphatidylethanolaminen, Phosphatidylinosit, Phosphatidylserinen, Phosphatidsäuren, N-Acylkephalin und Lysophosphatiden.

Phosphatide werden in großem Umfang in der Lebensmittel-, Kosmetik- und in der pharmazeutischen Industrie eingesetzt. Für den Einsatz in der pharmazeutischen Industrie wird in der Regel hochgereinigtes, ölfreies Phosphatidylcholin benötigt. Zur Erreichung dieses Reinheitsgrades ist eine Entölung des Rohphosphatides unbedingt notwendig. Durch die Entölung werden gleichzeitig störende Geruchs- und Farbstoffe entfernt. Die Entölung des Rohphosphatides wird im wesentlichen mit Aceton durchgeführt (DE-B-1 053 299, US-A-3 268 335, DE-B-1 047 597). Das entölte Rohphosphatid kann in bekannter Weise (US-A-2 945 869, US-A-2 724 649) mit Alkohol extrahiert werden. Die Alkoholextraktion kann auch vor einer Entölung vorgenommen werden. Sie sollte jedoch vorteilhafterweise immer nach der Entölung durchgeführt werden (s. R. ANEJA, Fette-Seifen-Anstrichmittel 1971, Bd. 73, H. 10, S. 645).

Der Nachteil der acetonischen Entölung liegt in der Bildung von Acetonfolgeprodukten, wie Mesityloxid, Diacetonalkohol, Phoron u. a., die zwar nur in kleinen Mengen vorliegen, aber wegen ihrer Toxizität und ihres charakteristischen Eigengeruchs störend wirken. Wie die DE-C-1 492 952, DE-B-1 692 568 und die Veröffentlichung von A. Liebing, Seife-Öle-Fette-Wachse, 1972, Bd. 98, H. 12, S. 359-362, zeigen, kann die Extraktion von Rohphosphatiden mit Ethanol, gegebenenfalls in Gegenwart von Fettsäuren oder Monoglyceriden durchgeführt werden, wobei man jedoch in Abhängigkeit vom Ethanol/Rohphosphatidverhältnis und der Temperatur Phosphatidylcholine mit sehr unterschiedlichen Zusammensetzungen erhält. So ist es zwar möglich, ölarme Produkte zu erhalten, jedoch nur unter erheblicher Verringerung der Phosphatidylcholin-Ausbeute und Erhöhung an störenden Nebenprodukten, wie insbesondere Mono-, Di- und Polysacchariden. Werden die Extraktionsbedingungen so variiert, daß eine möglichst hohe Phosphatidylcholin-Ausbeute erhalten wird, so steigt gleichzeitig der öl- bzw. Triglyceridgehalt wesentlich an, so daß auch hier die übliche Entölung mit Aceton nachgeschaltet werden muß. Aus der DE-C-1 617 679 und DE-C-1 617 680 ist bekannt, daß sich Phosphatidylcholin durch Adsorption an Aluminiumoxid und Eluieren mit Alkohol isolieren läßt, wodurch ein besonders reines Produkt erhalten wird.

Es wurde nun überraschenderweise festgestellt, daß bereits ein geringer Zusatz von Wasser zu der alkoholischen Phosphatidhaltigen Lösung, die bei der Extraktion von Rohphosphatiden mit Alkoholen erhalten wurde, eine praktisch vollständige Abscheidung des Öls, d. h. der Triglyceride aus der alkoholischen Lösung bewirkt, wodurch der Ölanteil abgetrennt werden kann, ohne daß es zu einer Ausfällung des Phosphatidylcholins kommt, wie dies nach den Angaben in der DE-C-261 212 und der US-A-1 001 247 zu erwarten ist. Trotz Anwesenheit der als Emulgatoren wirksamen Phosphatide tritt die gewünschte Phasentrennung ein.

Erfindungsgemäß wird daher die alkoholische, ölhaltige Phosphatidlösung mit 5-30 %, vorzugsweise 10-20 % Wasser, bezogen auf die alkoholische Lösung, versetzt, das Ölsediment abgetrennt und aus der wässrigen Alkoholphase das Phosphatidylcholin isoliert. Diese Isolierung kann durch Abdampfen des wässrigen Alkohols erfolgen oder durch eine Adsorption des Phosphatidylcholins an Aluminiumoxid und Eluieren mit Alkohol. Vorteilhafterweise kann man nach diesen neuen Verfahren durch Wahl der zugesetzten Wassermenge nicht nur das Entölen erreichen, sondern auch das Phosphatidylcholin : Phosphatidylethanolamin-Verhältnis steuern, um dann Phosphatidylethanolamin-arme bzw. -freie Phosphatidylcholin-Fraktionen zu erhalten.

Zur Durchführung des Verfahrens können handelsübliche, pflanzliche Rohphosphatide, wie z. B. aus Soja, Erdnuß, Sonnenblumen oder Raps, eingesetzt werden. Das Rohphosphatid wird mit einem niedermolekularen aliphatischen Alkohol, wie z. B. Methanol, Ethanol, Propanol oder Isopropanol, insbesondere jedoch mit 94-96 %igem Ethanol im Gewichtsverhältnis 1 : 1-1 : 5, vorzugsweise 1 : 2-1 : 3 bei 30-50 °C extrahiert. Diese Extraktlösung wird vom Sediment befreit und die klare Alkoholphase mit 5-30 Volumen-%, bevorzugt 10-20 Volumen-% Wasser, versetzt. Das Triglycerid-haltige Sediment wird abgetrennt, die wässrige Alkoholphase kann nun nach üblichen Verfahren durch $Al_2O_3$ Rühr- oder Säulenchromatographie, wie in DE-B-1 053 299 und DE-B-1 047 597 beschrieben ist, weiter gereinigt werden. Nach dem neuen Verfahren kann jedoch auch die Extraktionsphase, wie in DE-B-2 718 797 beschrieben, erst mit Aluminiumoxid behandelt werden und anschließend einer wässrigen Entölung, wie oben beschrieben, unterworfen werden.

Nach dem neuen Entölungsverfahren erhält man ölfreies, hochreines Phosphatidylcholin in hoher Ausbeute durch technisch einfach zu handhabende Arbeitsstufen.

## Beispiel 1

a) Sojarohphosphatid (mit ca. 25 % Triglyceridanteil) wird kontinuierlich bei 35 °C mit 95 Volumen %igem Ethanol im Gewichtsverhältnis 1 : 2,5 (Rohphosphatid : Ethanol) extrahiert. Das Sediment wird bei Raumtemperatur abgetrennt und die Ethanolphase eingedampft.

| | |
|---|---|
| Extraktionsausbeute | 27 % |
| Phosphatidylcholingehalt | 48 % |
| Phosphatidylethanolamingehalt | 12 % |
| Öl (Triglycerid) gehalt | 21 % |

Ausbeute : Phosphatidylcholin 56 % bezogen auf Rohphosphatid

b) Jeweils 1 l der nach 1a) gewonnenen ethanolischen Extraktlösung mit 88 g Feststoff/Liter wird bei Raumtemperatur mit unterschiedlichen Wassermengen vermischt. Nach Abtrennung der entstandenen Sedimente werden die verbleibenden wässrigen Ethanolphasen eingedampft. Man erhält folgende Ergebnisse :

| ml Wasser pro l-Lö-sung | Phospha-tidylcho-lingehalt | Phosphatidyl-cholin : Phos-phatidyletha-nolamin | Trigly-ceridge-halt | Phosphatidyl-cholin-Aus-beute bezogen auf Rohphos-phatid |
|---|---|---|---|---|
| 75 ml | 50 % | 5 : 1 | 9 % | 48 % |
| 175 ml | 51 % | 6 : 1 | 2 % | 35 % |
| 225 ml | 54 % | 7 : 1 | 1 % | 31 % |
| 440 ml | 55 % | 11 : 1 | < 1 % | 11 % |

c) 1,11 l einer nach 1b) mit 175 ml Wasser hergestellten wässrigen Ethanolphase (Feststoffgehalt 55 g/l) werden auf eine Chromatografie-Säule (30 mm Durchmesser, 400 mm Höhe), die mit einer Aufschlämmung nach 220 g $Al_2O_3$ in verdünntem Ethanol gefüllt ist, aufgegeben. Nach dem Durchlaufen der Lösung wird mit verdünntem Ethanol nachgewaschen. Die vereinigten Ethanolphasen werden eingedampft. Man erhält 25 g eines Phosphatidylethanolamin- und Triglycerid-freien Rückstands.

| | |
|---|---|
| Phosphatidylcholin-Gehalt | 92 % |
| Phosphatidylcholin-Ausbeute bezogen auf Rohphosphatid | 29 % |

Beispiel 2

1 l einer nach 1a) gewonnenen ethanolischen Extraktlösung (88 g Feststoff/l) wird mit 350 g $Al_2O_3$ 2 Stunden bei Raumtemperatur verrührt. Das $Al_2O_3$ wird abgesaugt und mit 95 Volumen %igem Ethanol nachgewaschen (20 % Triglyceridgehalt in Trockensubstanz). Das Filtrat wird mit 175 ml Wasser verrührt. Das Sediment wird anschließend abgetrennt und die verbleibende wässrige Ethanolphase eingedampft. Man erhält ca. 44 g eines Phosphatidylethanolamin- und Triglycerid-freien Rückstandes.

| | |
|---|---|
| Phosphatidylcholin-Gehalt | 85 % |
| Phosphatidylcholin-Ausbeute bezogen auf Rohphosphatid | 46 % |

Beispiel 3

Vergleichsbeispiel nach Verfahren nach A. LIEBING, Seigen-Öle-Fette-Wachse, 1972, Bd. 98, H. 12, S. 359-362.
Das Sojarohphosphatid wird kontinuierlich bei 45 °C mit 80 Vol.-%igem Ethanol extrahiert. Das Sojarohphosphatid-Ethanolverhältnis (G/G) beträgt 1 : 2,5. Das Sediment wird bei Raumtemperatur abgetrennt und die Ethanolphase eingedampft.

| | |
|---|---|
| Extraktausbeute | 14 % |
| Phosphatidylcholin-Gehalt | 31 % |
| Phosphatidylethanolamin-Gehalt | 4 % |
| Triglycerid-Gehalt | 1 % |
| Phosphatidylcholin-Ausbeute bezogen auf Rohphosphatid | 19 % |

Beispiel 4

Eine Phosphatidfraktion wird gemäß der im Beispiel 1 der DT-PS 1 492 952 beschriebenen Arbeitsweise hergestellt. Die alkohollösliche Fraktion wurde eingedampft. Der Rückstand enthält 15 % Triglyceri-de.

3

**0 043 018**

Beispiel 5

a) 250 g Soja-Rohphosphatid werden mit 1 000 g Methanol bei 50 °C extrahiert. Das Sediment wird bei Raumtemperatur abgetrennt und die Methanolphase eingedampft.

| | |
|---|---|
| Extraktausbeute | 34 % |
| Phosphatidylcholingehalt | 46 % |
| Phosphatidylethanolamingehalt | 15 % |
| Triglyceridgehalt | 10 % |
| Phosphatidylcholinausbeute bez. auf Rohphosphatid | 68 % |

b) 1 l einer nach 5a) gewonnen methanolischen Extraktlösung (70 g Feststoff/l) wird mit 100 ml Wasser vermischt. Nach Abtrennung des entstandenen Sediments wird die wässrige Methanolphase eingedampft. Man erhält 61 g Rückstand.

| | |
|---|---|
| Phosphatidylcholingehalt | 48 % |
| Phosphatidylethanolamingehalt | 9 % |
| Triglyceridgehalt | < 1 % |

**Ansprüche**

1. Verfahren zur Gewinnung von Phosphatidylcholin durch Entölung von ölhaltigen Phosphatidfraktionen, dadurch gekennzeichnet, daß man eine alkoholische, ölhaltige Phosphatidlösung mit 5-30 Volumen-% Wasser, bezogen auf die eingesetzte alkoholische Lösung, versetzt, das Ölsediment abtrennt und aus der wässrigen Alkoholphase in an sich bekannter Weise das Phosphatidylcholin erhält.

2. Verfahren gemäß Anspruch 1, dadurch gekennzeichnet, daß man die alkoholische Phosphatidlösung mit 10-20 Volumen-% Wasser versetzt.

3. Verfahren gemäß Anspruch 1-2, dadurch gekennzeichnet, daß man als ölhaltige Phosphatidlösungen alkohollösliche Phosphatidfraktionen verwendet, die aus Sojarohphosphatiden erhalten werden.

4. Verfahren gemäß Anspruch 1-3, dadurch gekennzeichnet, daß die alkoholische Phosphatidlösung niedermolekulare aliphatische Alkohole enthält.

5. Verfahren gemäß Anspruch 4, dadurch gekennzeichnet, daß die alkoholische Lösung Ethanol enthält.

**Claims**

1. A process for obtaining phosphatidylcholine by deoiling oil-containing phosphatide fractions characterized in that an alcoholic oil-containing phosphatide solution is mixed with from 5 to 30 percent by volume based on the alcoholic solution of water, that the oil sediment is separated, and that from the aqueous alcoholic phase the phosphatidylcholine is obtained in a per se known manner.

2. The process as claimed in claim 1, characterized in that the alcoholic phosphatide solution is mixed with from 10 to 20 percent by volume of water.

3. The process as claimed in claims 1 to 2, characterized in that as oil-containing phosphatide solutions, alcohol-soluble phosphatide fractions are used which are derived from crude soy phosphatides.

4. The process as claimed in claims 1 to 3, characterized in that the alcoholic phosphatide solution contains low molecular weight aliphatic alcohols.

5. The process as claimed in claim 4, characterized in that the alcoholic solution contains ethanol.

**Revendications**

1. Procédé de préparation de la phosphatidylcholine par déshuilage de fractions phosphatides contenant de l'huile, caractérisé en ce qu'on mélange une solution alcoolique de phosphatides contenant de l'huile à 5-30 % en volume d'eau, rapporté à la solution alcoolique mise en œuvre, on sépare le sédiment huileux et on obtient la phosphatidylcholine d'une façon connue à partir de la phase alcoolique aqueuse.

2. Procédé selon la revendication 1, caractérisé en ce qu'on mélange la solution alcoolique de phosphatides à 10-20 % d'eau en volume.

3. Procédé selon la revendication 1 ou 2, caractérisé en ce qu'on utilise comme solutions de phosphatides contenant de l'huile des fractions phosphatides solubles dans l'alcool qui sont obtenues à partir de phosphatides bruts du soja.

4. Procédé selon l'une des revendications 1 à 3, caractérisé en ce que la solution alcoolique de phosphatides contient des alcools aliphatiques à bas poids moléculaire.

5. Procédé selon la revendication 4, caractérisé en ce que la solution alcoolique contient de l'éthanol.